# EUROPÄISCHE PATENTSCHRIFT

(11) **EP 2 746 024 B1**
(45) Veröffentlichungstag und Bekanntmachung des Hinweises auf die Patenterteilung: **27.05.2015**
(21) Anmeldenummer: 12199014.7
(22) Anmeldetag: 21.12.2012
(51) Int. Cl.: B29C 43/24, D21G 1/00

(54) **Walzenstuhlung**
Roller frame
Siège de cylindre

(43) Veröffentlichungstag der Anmeldung: 25.06.2014
(73) Patentinhaber: Reifenhäuser GmbH & Co. KG Maschinenfabrik, 53844 Troisdorf (DE)
(72) Erfinder: Meyer, Helmut, 53842 Troisdorf (DE); Böhm, Andreas, 53842 Troisdorf (DE)
(74) Vertreter: Wagner, Matthias

(56) Entgegenhaltungen:
- DE-A1- 3 004 913
- DE-A1- 3 527 765
- DE-A1- 19 544 988
- US-A- 4 434 713
- US-A1- 2009 295 017

## Beschreibung

Die vorliegende Erfindung betrifft eine Walzenstuhlung, umfassend mindestens zwei in einem Gehäuse gehalterte Walzen, zwischen denen ein Walzenspalt ausbildbar ist, wobei die Walzen endseitig in Lagern drehbar gelagert sind und mindestens eine der Walzen als Zustellwalze ausgeführt ist und ein Verstellsystem aufweist, mittels dessen die Lager der Zustellwalze unter Veränderung des Walzenspaltes verlagerbar sind.

Derartige Walzenstuhlungen werden beispielsweise bei der Herstellung von Kunststofffolien und -platten eingesetzt. Ein typisches Anwendungsbeispiel sind sogenannte Glättwerke, in welchen eine in einem Extrusionsprozess gebildete Schmelze nach dem Austritt aus einem Breitschlitzwerkzeug durch einen einstellbaren Glättspalt zwischen zwei Walzen hindurchgeführt wird. Die Schmelze wird dabei abgekühlt und derart geformt, dass eine Folienbahn mit einheitlicher Dicke sowie mit einem homogenen Erscheinungsbild über die gesamte Folienfläche entsteht. Derartige sogenannte Glättwerksfolien werden beispielsweise aus Polystyrol, Polypropylen oder Polyester gefertigt und finden eine breite Verwendung unter anderem beim Transport und Schutz von Nahrungsmitteln sowie in der Automobilindustrie.

Ein Glättwerk umfasst in der Regel mindestens zwei Walzen, von denen eine Walze ortsfest und mindestens eine weitere Walze als Zustellwalze ausgeführt ist. Diese Zustellwalze ist über ein Verstellsystem verlagerbar, so dass unterschiedliche Glättspalteinstellungen zwischen der ortsfesten und der verstellbaren Walze realisierbar sind. Auf diese Weise können Folien unterschiedlicher Stärke hergestellt werden.

Bekannte Glättwerke sind dabei üblicherweise mit einem hydraulischen Verstellsystem ausgestattet, welches verschiedene Nachteile aufweist. So führt die hierbei zum Einsatz kommende Hydraulikflüssigkeit, in der Regel Öl, bei Leckagen zu Kontaminationen der Folienbahnen und macht diese unbrauchbar. Auch ist der Einsatz der regelmäßig auszutauschenden Hydrauliklösung vergleichsweise teuer und der Platzbedarf einer entsprechenden Vorrichtung ist relativ groß. Schließlich lassen sich hydraulische Systeme häufig nicht mit der hier notwendigen Genauigkeit steuern, so dass zur Bestimmung des eingestellten Glättspaltes und gegebenenfalls zu dessen Nachregelung aufwendige zusätzliche Messeinrichtungen eingesetzt werden müssen.

Aus der US 4 434 713 A ist ein Kalander mit mehreren Walzen bekannt, bei welchem der Anpressdruck der obersten Walze auf die darunter befindlichen weiteren Walzen mit einem Verstellmittel aus einem Ritzel-Zahnstangensystem bewirkt werden kann. Die Spalteinstellung erfolgt ausgehend von der untersten Walze über dort angreifende Hydraulikzylinder.

Die US 2 861 504 A sowie US 1 989 038 A beschreiben Kalander mit einer Einstellvorrichtung für die Walzen mittels eines Spindel-Spindelmuttersystems. Derartige Systeme mit einer Spindel und einer darauf ablaufenden Spindelmutter weisen aber zur Sicherstellung der Verstellbarkeit ein unvermeidlich hohes Spiel in beiden Verstellrichtungen auf, welches derartige Konstruktionen für eine exakte Spalteinstellung z.B. in einem Glättwerk ungeeignet macht.

Die EP-A-2 581 192 offenbart eine Walzenstühlung, wobei ein Verstellsystem mit einem Ritzel das ein Eingriff steht mit eine Zahnstange, vorgesehen wird.

Aufgabe der vorliegenden Erfindung ist die Bereitstellung einer Walzenstuhlung, durch welche die beschriebenen Nachteile des Standes der Technik überwunden werden und welche eine hochgenaue idealerweise spielfreie Einstellung des Walzenspaltes ermöglicht.

Diese Aufgabe wird gelöst durch eine Walzenstuhlung mit den Merkmalen des Patentanspruchs 1.

Vorteilhafte Ausgestaltungen und Weiterbildungen der Erfindung sind Gegenstand der Unteransprüche.

Die Erfindung sieht vor, dass das der Einstellung des Walzenspaltes dienende Verstellsystem eine Zahnstange sowie ein Ritzel aufweist, welches in Zahneingriff mit der Zahnstange steht und über einen Motor drehantreibbar ist, wobei der Abstand zwischen dem Ritzel und der Zahnstange unter Veränderung der Zahneingriffstiefe zwischen diesen veränderbar ist.

Mit anderen Worten liegt der Kerngedanke der vorliegenden Erfindung darin, das bislang zur Walzenzustellung verwendete Hydrauliksystem durch ein elektromechanisches System zu ersetzen. Derartige Systeme sind in ihrer erfindungsgemäß vorgesehenen Ausführung mit Zahnstange und Ritzel im Hinblick auf eine exakte Positionierung herkömmlichen Hydrauliksystemen überlegen und stellen eine wirtschaftliche Alternative zu diesen dar.

Im Einzelnen ist es vorgesehen, dass eine Zahnstange an einem Lager der Zustellwalze angreift und mit einem über einen Motor antreibbaren Ritzel derart zusammenwirkt, dass die Rotationsbewegung des Motors und des Ritzels in eine Linearbewegung der Zahnstange und damit des Lagers der Zustellwalze umgesetzt wird. Je nach Drehrichtung des Motors kann die Zustellwalze so unter Veränderung des Walzenspaltes auf eine ortsfeste Walze zu oder von dieser weg bewegt werden. Die korrespondierenden Zahnungen von Zahnstange und Ritzel sind dabei so ausgeführt, dass ein sehr exaktes Einstellen des Verstellweges möglich ist. Hierdurch lassen sich minimalste Verstellwege im µm-Bereich umsetzen.

Aufgrund der erfindungsgemäß vorgesehenen Veränderbarkeit des Abstandes zwischen dem Ritzel und der Zahnstange kann die Zahneingriffstiefe zwischen diesen beiden in Eingriff stehenden Teilen der Verstelleinrichtung eingestellt und verändert werden. Üblicherweise wird die Zahneingriffstiefe zwischen einem Ritzel und einer hierzu korrespondierenden Zahnstange auf ein vorbestimmtes Maß festgelegt, welches aufgrund des dann vorherrschenden Zahnflankenspiels die Freigängigkeit der Ritzelzähne in der Verzahnung der Zahnstange sicherstellt, wenn das Ritzel mittels des zugeordneten Motors gedreht wird. Wird aber z. B. nach Erreichen der gewünschten Position die Tiefe des Zahneingriffs erhöht, indem der Abstand zwischen dem Ritzel und der Zahnstange entsprechend verringert wird, so wird auch das vorhandene Zahnflankenspiel verringert und im Idealfall nahezu völlig eliminiert.

Die Erfindung nutzt diesen vorangehend beschriebenen Effekt, um eine leichte Verstellung mittels des an sich vorteilhaften Zahnstangen-Ritzelsystems zu gewährleisten und das Spiel innerhalb der Verstelleinrichtung zu eliminieren. Auf diese Weise wurde in Versuchen bereits das Spiel auf unter 1/100 mm eingestellt.

Sofern eine erneute Veränderung des Walzenspaltes erforderlich wird, kann vorgesehen sein zunächst die Zahneingriffstiefe und das damit einhergehende Zahnflankenspiel durch Vergrößerung des Abstandes zwischen Ritzel und Zahnstange wieder auf ein übliches Niveau erhöht und anschließend durch Rotation des Ritzel des gewünschte Verstellweg abgefahren, bis der Vorgang der Spieleliminierung aufs Neue beginnt.

Da eine Verstellung jedoch nur selten nötig ist, kann mittels der Verstelleinrichtung auch eine dauerhafte Einstellung vorgenommen werden, da selbst bei eliminiertem Spiel noch eine Verstellung möglich ist.

In einer alternativen Ausgestaltung der Erfindung ist vorgesehen, das Ritzel und den Motor unter Zwischenlage einer austauschbaren Distanzplatte am Gehäuse zu haltern dergestalt, dass die Dicke der Distanzplatte den Abstand zwischen Ritzel und Zahnstange definiert. Durch Auswahl einer geeigneten Dicke der Distanzplatte oder eine entsprechenden Nacharbeit an dieser Platte, z.B. mechanischen Materialabtrag, kann das Spiel innerhalb der Verstelleinrichtungen im gewünschten Maß eliminiert werden.

Nach einem Vorschlag der Erfindung ist der Abstand zwischen dem Ritzel und der Zahnstange über ein am Ritzel angreifendes Exzentergetriebe veränderbar, welches bei entsprechender Betätigung, z.B. über eine Handkurbel oder einen steuerbaren Antrieb die gewünschte Veränderung des Abstandes des Ritzels zur Zahnstange hervorruft.

Ferner kann vorgesehen sein, dass der Abstand zwischen dem Ritzel 11 und der Zahnstange 10 lösbar fixierbar ist, um stabile Einstellzustände zu gewährleisten. Auch kann auf diese Weise eine Vorspannung des Ritzels gegenüber der Zahnstange bewirkt werden, um das Spiel zwischen diesen völlig zu eliminieren. Sie können auch mit geeigneten Beschichtungen, z. B. einer PVD-Beschichtung versehen sein, um z. B. Reibung und Verschleiß zu minimieren.

Die Zahnstange und das Ritzel sind nach einem Vorschlag der Erfindung schrägverzahnt ausgeführt, um größere Flankenauflagen zu realisieren.

Ferner kann die Zahnstange zur Erzielung guter Standfestigkeit gehärtet, geschliffen und gehont ausgeführt sein.

Gemäß einer Ausgestaltung der Erfindung weist die Zustellwalze an beiden Lagern jeweils ein erfindungsgemäßes Verstellsystem aus Zahnstange und Ritzel sowie zughörigem Antriebsmotor auf. Vorzugsweise sind die beiden Verstellsysteme dabei zentral ansteuerbar, so dass ein sehr genaues paralleles Verfahren der Walze und damit das Einstellen eines über die gesamte Walzenlänge einheitlich dimensionierten Walzenspaltes möglich ist.

Ein weiterer Vorschlag der Erfindung sieht vor, dass zwischen dem Ritzel und dem Motor des Verstellsystems ein Getriebe angeordnet ist. Durch ein derartiges Getriebe kann beispielsweise eine Übersetzung in den Antrieb eingebracht werden. Bei einer bevorzugten Ausführung der Erfindung ist das Getriebe als Planetengetriebe mit hoher Verdrehsteifigkeit und geringem Flankenspiel ausgebildet, wodurch besonders große Übersetzungen realisierbar sind.

Der das Ritzel antreibende Motor ist gemäß einer Ausgestaltung der Erfindung ein Servomotor. Servomotoren zeichnen sich neben kompakter Bauweise durch ein sehr gutes Regelverhalten aus und ermöglichen es, eine Zielposition mikrometergenau anzufahren.

Bei einer weiteren Ausführung der erfindungsgemäßen Walzenstuhlung sind drei Walzen vorgesehen, von denen mindestens zwei Walzen als Zustellwalzen ausgebildet sind. Bei einer solchen Anordnung lassen sich zwei Walzenspalte einstellen und eine beispielsweise zu glättende Folienbahn kann nacheinander durch die beiden Glättspalte geführt werden, wodurch besonders gute Ergebnisse im Glättprozess erzielt werden können.

Schließlich kann die erfindungsgemäße Walzenstuhlung auch noch das so genannte ax-crossing ermöglichen, bei dem zur Kompensation von unvermeidlichen Walzendurchbiegungen eine Zustellwalze gegenüber der nicht verstellbaren Walze verschränkbar gelagert ist, das heißt die idealisierten Mittellinien dieser beiden Walzen verlaufen dann nicht mehr parallel, sondern leicht verschränkt zueinander, wodurch sich ein durchbiegungsunabhängiger konstanter Spalt zwischen beiden Walzen einstellen lässt.

Im Folgenden wird die Erfindung anhand eines Ausführungsbeispiels und unter Bezugnahme auf die beigefügten Zeichnungen näher erläutert. Es zeigen:
- Figur 1: eine schematische Draufsicht auf eine erfindungsgemäße Walzenstuhlung;
- Figur 2: eine schematische Seitenansicht der Walzenstuhlung aus Figur 1.
- Figur 3: die Ansicht auf einen Teil der erfindungsgemäßen Walzenstuhlung
- Figur 4: in schematischer Darstellung das erfindungsgemäße Prinzip zur Reduzierung des Zahnflankenspiels
- Figur 5a: eine alternative Ausgestaltung der erfindungsgemäßen Walzenstuhlung in einer Ansicht gemäß Fig. 3
- Figur 5b: die Seitenansicht der Vorrichtung gemäß Figur 5a

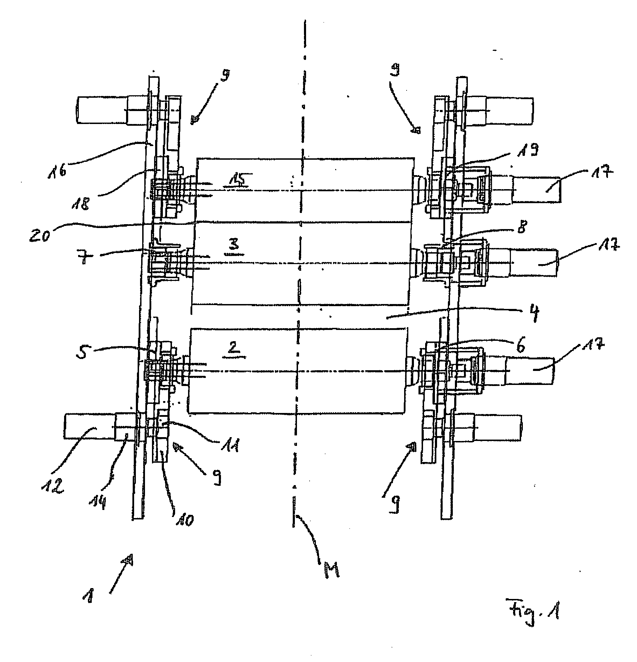

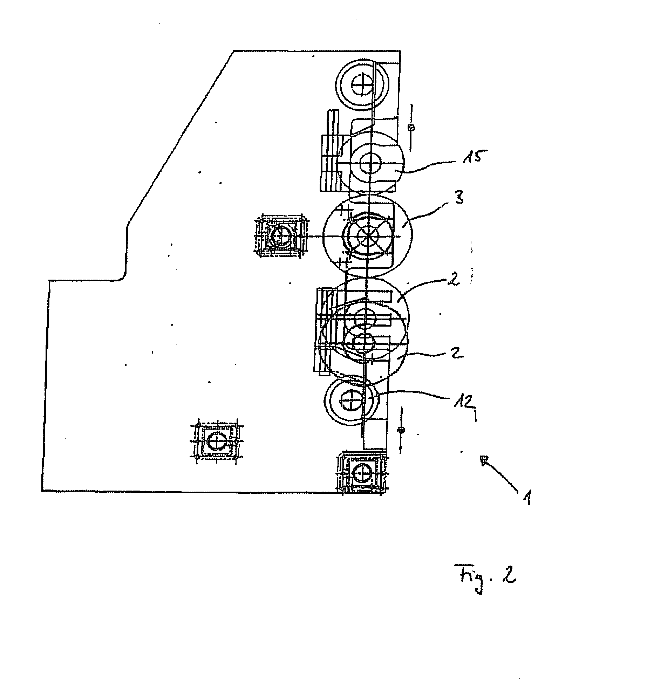

Die Figuren 1 und 2 zeigen eine im Ganzen mit 1 bezeichnete Walzenstuhlung eines Glättwerkes, welche drei parallel angeordnete Walzen 2, 3, 15 umfasst, die in einem Gestell 16 gehaltert sind. Alle drei Walzen 2, 3, 15 sind endseitig über Lager 5, 6, 7, 8, 18, 19 mit dem Gestell 16 verbunden, in denen sie drehbar gelagert sind. Jede der drei Walzen 2, 3, 15 weist einen eigenen Antriebsmotor 17 auf, über welchen sie in Rotation versetzt werden kann.

Die mittig angeordnete Walze 3 ist eine ortsfeste Walze, während die beiden Walzen 2, 15 als Zustellwalzen ausgebildet sind. Die beiden Zustellwalzen sind jeweils beidseitig mit einem Verstellsystem 9 ausgestattet, über welches die jeweiligen Lager 5, 6, 18, 19 mitsamt der darin aufgenommenen Walzen 2, 15 entlang des Gestelles 16 linear verschiebbar sind.

Durch Verschiebung der Lager 5, 6, 18, 19 kann zwischen den Walzen 2 und 3 ein Walzenspalt 4 und zwischen den Walzen 3 und 15 ein Walzenspalt 20 eingestellt werden.

Die nun folgende Beschreibung des Aufbaus und der Funktionsweise des Verstellsystems 9 beschränkt sich auf das in Figur 1 links unten dargestellte Verstellsystem 9 zur Verlagerung des Lagers 5 der Walze 2. Aufgrund der Symmetrie des Aufbaus der Walzenstuhlung gilt Entsprechendes für das am anderen Ende der Walze 2 angeordnete Verstellsystem 9 sowie für die beiden die Position der Walze 15 steuernden Verstellsysteme 9.

Das Verstellsystem 9 weist eine Zahnstange 10 sowie ein mit dieser zusammenwirkendes Ritzel 11 auf. Die Zahnstange 10 greift an dem Lager 5 an. Über einen Servomotor 12 sowie ein zwischengeschaltetes Planetengetriebe 14 ist das Ritzel 11 zur Rotation antreibbar, wodurch sodann die Zahnstange 10 und mit dieser das Lager 5 linear und geführt durch die Trägerkonstruktion 16 verschoben werden. Je nach Drehrichtung des Servomotors 12 erfolgt die Verschiebung auf die ortsfeste Walze 3 zu oder von dieser weg. Durch die Verwendung eines Servomotors ist es dabei möglich, eine gewünschte Position sehr exakt anzufahren.

Um die Walze 2 exakt parallel zu der ortsfesten Walze 3 verfahren und positionieren zu können, erfolgt der Antrieb der Verstellsysteme 9 für die Zustellbewegung der beiden Lager 5 und 6 synchron.

Sobald der gewünschte Verfahrweg der Zustellwalzen 2,15 durch die vorangehend erläuterte Betätigung des Verstellsystems 9 abgefahren worden ist und der Walzenspalt zur ortsfesten Walze 3 im gewünschten Maß eingestellt ist, muss zur Sicherstellung einer möglichst konstanten Produktqualität jede der verstellbaren Walzen möglichst spielfrei gelagert werden, um den Walzenspalt auch bei sich einstellender Flächenpressung zwischen den Walzen auf dem gewünschten Maß zu halten.

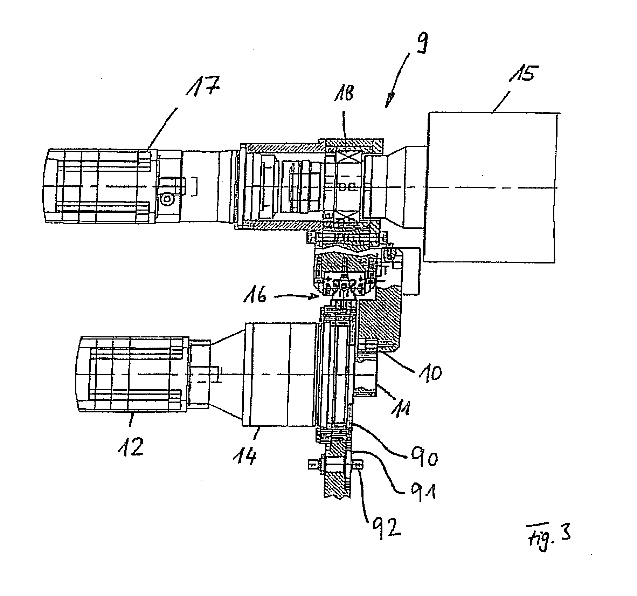

Zu diesem Zweck ist der Servomotor 12 mit seinem Planetengetriebe 14 und dem davon drehangetriebenen Ritzel 11, wie aus Figur 3 ersichtlich, in einem Exzentergetriebe bestehend aus einem ringförmigen Exzenter 90 mit Außenverzahnung und einen in die Außenverzahnung eingreifenden Ritzel 91 gelagert, welches zum Beispiel durch Angriff eines Drehwerkzeuges (nicht dargestellt) oder eines geeigneten Antriebsmotors am Zapfen 92 um seine eigene Achse gedreht werden kann und infolge des Zahneingriffs sodann den Exzenter 90 gleichsam verdreht.

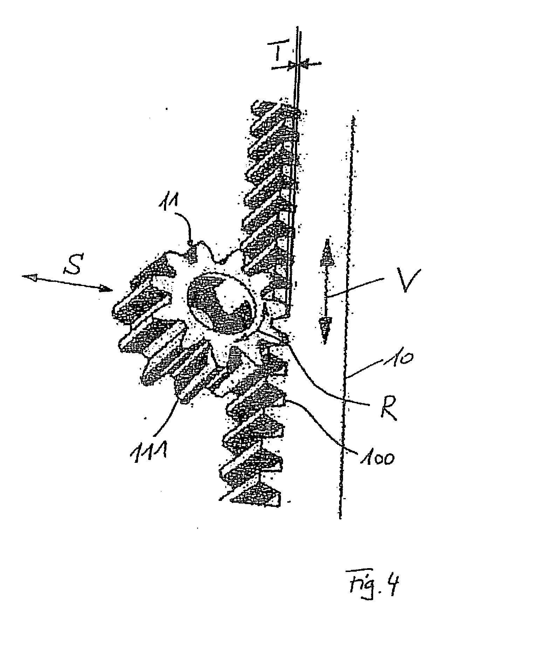

Wie aus der schematisierten Darstellung gemäß Figur 4 ersichtlich, wird bei Betätigung des Exzenters 90 in der einen oder anderen Drehrichtung eine Verlagerung des mit der Zahnstange 10 in Eingriff stehenden Ritzels 11 in oder entgegen dem Zahngrund 100 der Zahnstange 10 bewirkt, was in Figur 4 mit Pfeil S angedeutet ist.

Wenn demgemäß durch Betätigung des Exzenters 90 das Ritzel 11 in Pfeilrichtung S nach rechts verlagert wird, vergrößert sich die Zahneingriffstiefe der Ritzelzähne 111 des Ritzels 11 in der Zahnstange 10, so dass der Abstand T zwischen Ritzel 11 und Zahnstange 10 entsprechend verringert wird. Dementsprechend verringert sich auch das Zahnflankenspiel zwischen dem Ritzel 11 und der Zahnstange 10, so dass nahezu völlige Spielfreiheit zwischen dem Ritzel 11 und der Zahnstange 10 eingestellt werden kann.

Wird eine erneute Betätigung des Verstellsystems 9 erforderlich, um den Walzenspalt zwischen der Zustellwalze 2, 15 und der ortsfesten Walze 3 zu verändern, so wird zunächst der Exzenter 90 mittels des Ritzels 91 so verdreht, dass eine Bewegung des Ritzels 11 in Fallrichtung S nach links gemäß der Darstellung in Figur 4 erfolgt, so dass durch den sich vergrößernden Abstand T zwischen Ritzel 11 und Zahnstange 10 die Zahneingriffstiefe zwischen Ritzel 11 und Zahnstange 10 verringert wird, bis wieder ein ausreichendes Zahnflankenspiel zum leichten Drehen des Ritzels 11 in Pfeilrichtung R und als Reaktion ein Verfahrbewegung in Fallrichtung V möglich wird. Sobald der neue gewünschte Walzenspalt auf diese Weise einjustiert ist, wird erneut der Exzenter 90 betätigt, um die Zahneingriffstiefe wieder auf das mögliche Minimum zu verringern.

Alternativ kann das Zahnflankenspiel auch dauerhaft auf ein Minimum reduziert werden und beibehalten werden, da auch dann noch eine Bewegung des Ritzels 11 in der Zahnstange 10 möglich ist. Das geringe eingestellte Zahnstangenspiel erlaubt jedoch eine hochpräzise Einstellung des Walzenspaltes.

Bei der Herstellung von Glättwerksfolien wird nun ein in einer Plastifiziereinheit erzeugter und aus einem Breitschlitzwerkzeug austretender Schmelzestrom in ein Glättwerk gemäß Figur 1 eingeführt und dort zunächst über die Walze 2 geführt, dann durch den Walzenspalt 4 hindurchgefädelt und unter der Walze 3 hinweg durch den Walzenspalt 20 wieder über die Walze 15 geführt. An das Glättwerk schließt sich üblicherweise ein Wickler an, in dem die fertige Folie aufgewickelt wird. Die Walzen 2, 3, 15 des Glättwerkes werden zur Abkühlung des Schmelzestromes gekühlt.

In der in Figur 1 dargestellten Situation ist der Walzenspalt 4 weit geöffnet, was beispielsweise dem anfänglichen Einfädeln eines zu glättenden Schmelzestromes dient. Sobald der Schmelzestrom über die Walzen 2, 3, 15 geführt sowie durch die Walzenspalte 4, 20 gefädelt ist, kann der Walzenspalt 4 durch Verlagerung der Lager 5, 6 in der oben beschriebenen Weise verkleinert werden bis auf ein voreingestelltes, für den jeweiligen Glättprozess erforderliches Maß. Eine solche schmale Einstellung des Glättspaltes ist in Figur 1 am Beispiel des Walzenspaltes 20 zu erkennen. In der Seitenansicht von Figur 2 ist die als Zustellwalze ausgebildete Walze 2 in zwei durch eine entsprechende Verschiebung auseinander hervorgegangenen Positionen dargestellt.

Mit einer erfindungsgemäßen, einen Servomotor und ein Planetengetriebe aufweisenden Walzenstuhlung können je nach verwendetem Walzentyp Haltekräfte bis 500000 N und Verfahrkräfte bis 100000 N aufgebracht werden. Die auf diese Weise realisierbaren Verfahrwege liegen typischerweise zwischen 150 mm und 200 mm bei einer Positioniergenauigkeit zwischen 5 µm und 2 µm.

Der Vorzug der erfindungsgemäßen Walzenstuhlung mit elektromechanischem Verstellsystem liegt vor allem in der exakten Steuerbarkeit sowie der einfacheren Handhabung gegenüber einem hydraulischen System. Zudem weist das elektromechanische System eine kompaktere Bauweise und einen geringeren Verschleiß auf. Aufgrund der durch das erfindungsgemäße System möglichen genauen Positionierbarkeit der Zustellwalzen kann insbesondere auf zusätzliche Mess- und Einstelleinrichtungen zur Nachregelung des Walzenspaltes verzichtet werden, so dass sich durch den Einsatz des elektromechanischen Systems auch wirtschaftliche Vorteile ergeben.

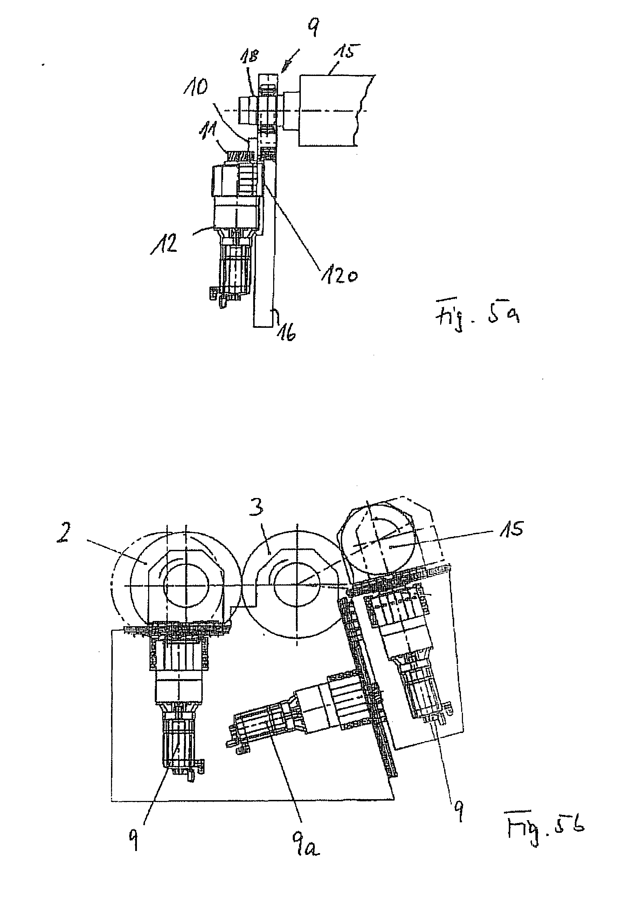

Bei dem Ausführungsbeispiel gemäß Figuren 5a, 5b ist der das Ritzel 11 antreibende Motor 12 unter Zwischenlegen einer auswechselbaren Distanzplatte 120 am Gehäuse 16 gehaltert, wobei die Dicke der Distanzplatte 120 den Abstand zwischen Ritzel 11 und Zahnstange 10 und damit die Zahneingriffstiefe der Ritzelzähne des Ritzels 11 in der Zahnstange 10 definiert.

Verändert man nun die Dicke der Distanzplatte 120, z. B. durch Austausch und/oder Bearbeitung derselben, verändert sich entsprechend auch der Abstand zwischen Ritzel 11 und Zahnstange 10 und damit das Flankenspiel. Je dünner die Distanzplatte 120 ausgeführt wird, umso kleiner wird das besagte Spiel. Somit ist es möglich, das Zahnflankenspiel auf ein möglichst optimales Minimum einzujustieren.

Schließlich erkennt man aus der Figur 5b noch, dass im gezeigten Ausführungsbeispiel beide Zustellwalzen 2, 15 mit einem Verstellsystem 9 ausgebildet sind, jedoch ist die Zustellwalze 15 zusätzlich mit einem zum Verstellsystem 9 um 90° gedreht angeordnetem zweiten Verstellsystem 9a ausgebildet, mittels dessen eine axiale Verschränkung für ortsfesten Walze 3 eingestellt werden kann, um die Durchbiegung der Walze zu kompensieren.

## Patentansprüche

1. Walzenstuhlung (1), umfassend mindestens zwei in einem Gehäuse (16) gehalternte Walzen (2,3), zwischen denen ein Walzenspalt (4) ausbildbar ist, wobei die Walzen (2,3) endseitig in Lagern (5,6,7,8) drehbar gelagert sind und mindestens eine der Walzen (2,3) als Zustellwalze ausgeführt ist und ein Verstellsystem (9) aufweist, mittels dessen die Lager (5, 6) der Zustellwalze unter Veränderung des Walzenspaltes (4) verlagerbar sind, wobei das Verstellsystem (9) eine Zahnstange (10) sowie ein Ritzel (11) aufweist, welches in Zahneingriff mit der Zahnstange steht und über einen Motor (12) drehantreibbar ist, wobei der Abstand zwischen dem Ritzel (11) und der Zahnstange (10) unter Veränderung der Zahneingriffstiefe zwischen diesen veränderbar ist.

2. Walzenstuhlung (1) nach Anspruch 1, **dadurch gekennzeichnet, dass** der Abstand zwischen dem Ritzel (11) und der Zahnstange (10) über ein am Ritzel (11) angreifendes Exzentergetriebe veränderbar ist.

3. Walzenstuhlung nach Anspruch 1, **dadurch gekennzeichnet, dass** der Ritzel (11) und der Motor (12) unter Zwischenlage einer austauschbaren Distanzplatte (120) am Gehäuse (16) gehaltert sind und die Dicke der Distanzplatte (120) den Abstand zwischen Ritzel (11) und Zahnstange (10) definiert.

4. Walzenstuhlung (1) nach einem der Ansprüche 1 bis 3, **dadurch gekennzeichnet, dass** der Abstand zwischen dem Ritzel (11) und der Zahnstange (10) lösbar fixierbar ist.

5. Walzenstuhlung (1) nach einem der Ansprüche 1 bis 4, **dadurch gekennzeichnet, dass** die Zustellwalze an beiden Lagern (5,6) jeweils ein Verstellsystem (9) aufweist.

6. Walzenstuhlung (1) nach Anspruch 5, **dadurch gekennzeichnet, dass** die beiden Verstellsysteme (9) der Zustellwalze zentral ansteuerbar sind.

7. Walzenstuhlung (1) nach einem der Ansprüche 1 bis 6, **dadurch gekennzeichnet, dass** zwischen dem Ritzel (11) und dem Motor (12) des Verstellsystems (9) ein Getriebe (14) angeordnet ist.

8. Walzenstuhlung (1) nach Anspruch 7, **dadurch gekennzeichnet, dass** das Getriebe (14) als Planetengetriebe ausgebildet ist.

9. Walzenstuhlung (1) nach einem der Ansprüche 1 bis 8, **dadurch gekennzeichnet, dass** der Motor (12) ein Servomotor ist.

10. Walzenstuhlung (1) nach einem der Ansprüche 1 bis 8, **dadurch gekennzeichnet, dass** drei Walzen (2,3,15) vorgesehen sind, von denen mindestens zwei Walzen (2,15) als Zustellwalzen ausgebildet sind.

11. Walzenstuhlung (1) nach einem der Ansprüche 1 bis 10, **dadurch gekennzeichnet, dass** zumindest eine der Zustellwafzen (2, 15) gegenüber der Walze (2) verschränkbar gelagert ist, dergestalt, dass die Durchbiegung kompensierbar ist.

## Claims

1. A roller frame (1), including at least two rollers (2, 3) mounted in a housing (16), between which a nip (4) can be formed; the ends of the rollers (2, 3) are supported in rotary fashion in bearings (5, 6, 7, 8) and at least one of the rollers (2, 3) is embodied as an advancing roller and has an adjusting system (9) by means of which it is possible to move the bearings (5, 6) of the advancing roller, thus changing the nip (4), whereby the adjusting system (9) has a rack (10) and a pinion (11) whose teeth engage with those of the rack and can be driven to rotate by a motor (12); it is possible to change the distance between the pinion (11) and the rack (10) by changing the tooth engagement depth between them.

2. The roller frame (1) according to claim 1, **characterized in that** it is possible to change the distance between the pinion (11) and the rack (10) by means of a cam mechanism acting on the pinion (11).

3. The roller frame according to claim 1, **characterized in that** the pinion (11) and the motor (12) are mounted on the housing (16) with the interposition of a replaceable spacer plate (120) and the thickness of the spacer plate (120) defines the distance between the pinion (11) and the rack (10).

4. The roller frame (1) according to one of claims 1 through 3, **characterized in that** the distance between the pinion (11) and the rack (10) is releasably fixable.

5. The roller frame (1) according to one of claims 1 through 4, **characterized in that** the advancing roller has a respective adjusting system (9) on each of the bearings (5, 6).

6. The roller frame (1) according to claim 5, **characterized in that** the two adjusting systems (9) of the advancing roller are centrally controllable.

7. The roller frame (1) according to one of claims 1 through 6, **characterized in that** a transmission (14) is provided between the pinion (11) and the motor (12) of the adjusting system (9).

8. The roller frame (1) according to claim 7, **characterized in that** the transmission (14) is embodied as a planetary gear.

9. The roller frame (1) according to one of claims 1 through 8, **characterized in that** the motor (12) is a servomotor.

10. The roller frame (1) according to one of claims 1 through 8, **characterized in that** three rollers (2, 3, 15) are provided, of which at least two rollers (2, 15) are embodied as advancing rollers.

11. The roller frame (1) according to one of claims 1 through 10, **characterized in that** at least one of the advancing rollers (2, 15) is supported so that it can be moved crosswise relative to the roller (2) so that it is possible to compensate for the deflection.

## Revendications

1. Assemblage de cylindres (1) comprenant au moins deux cylindres (2, 3) montés dans une enceinte (16) et entre lesquels cylindres peut être ménagé un écartement (4), dans lequel les cylindres (2, 3) sont montés à rotation à leurs extrémités dans des paliers (5, 6, 7, 8) et au moins l'un des cylindres (2, 3) est conçu pour jouer le rôle de cylindre de réglage et présente un système de déplacement (9) au moyen duquel les paliers (5, 6) du cylindre de réglage peuvent être déplacés en modifiant l'écartement (4) des cylindres, dans lequel le système de déplacement (9) présente une crémaillère (10) ainsi qu'un pignon (11), qui est en prise avec la crémaillère et peut être entraîné en rotation via un moteur (12), dans lequel la distance entre le pignon (11) et la crémaillère (10) peut être modifiée tout en modifiant la profondeur d'engagement denté entre ces derniers.

2. Assemblage de cylindres (1) selon la revendication 1, **caractérisé en ce que** l'écartement entre le pignon (11) et la crémaillère (10) peut être modifié via un engrenage d'excentrique en prise sur le pignon (11).

3. Assemblage de cylindres selon la revendication 1, **caractérisé en ce que** le pignon (11) et le moteur (12) sont montés sur l'enceinte (16) en disposant entre eux une plaque d'écartement échangeable (120) et l'épaisseur de la plaque d'écartement (120) définit l'écartement entre le pignon (11) et la crémaillère (10).

4. Assemblage de cylindres (1) selon l'une quelconque des revendications 1 à 3, **caractérisé en ce que** l'écartement entre le pignon (11) et la crémaillère (10) peut être fixé de manière amovible.

5. Assemblage de cylindres (1) selon l'une quelconque des revendications 1 à 4, **caractérisé en ce que** le cylindre de réglage présente au niveau des deux paliers (5, 6) respectivement un système de déplacement (9).

6. Assemblage de cylindres (1) selon la revendication 5, **caractérisé en ce que** les deux systèmes de déplacement (9) du cylindre de réglage peuvent être commandés centralement.

7. Assemblage de cylindres (1) selon l'une quelconque des revendications 1 à 6, **caractérisé en ce qu'**un train d'engrenages (14) est aménagé entre le pignon (11) et le moteur (12) du système de déplacement (9).

8. Assemblage de cylindres (1) selon la revendication 7, **caractérisé en ce que** le train d'engrenages (14) se présente sous la forme d'un train d'engrenages planétaire.

9. Assemblage de cylindres (1) selon l'une quelconque des revendications 1 à 8, **caractérisé en ce que** le moteur (12) est un servomoteur.

10. Assemblage de cylindres (1) selon l'une quelconque des revendications 1 à 8, **caractérisé en ce qu'**il est prévu trois cylindres (2, 3, 15) dont au moins deux cylindres (2, 15) se présentent comme cylindres de réglage.

11. Assemblage de cylindres (1) selon l'une quelconque des revendications 1 à 10, **caractérisé en ce qu'**au moins l'un des cylindres de réglage (2, 15) est monté de manière à pouvoir être avoyé par rapport au cylindre (2) de façon à pouvoir compenser la déformation.
